# EUROPÄISCHE PATENTSCHRIFT

(11) **EP 1 684 621 B1**
(45) Veröffentlichungstag und Bekanntmachung des Hinweises auf die Patenterteilung: **24.10.2007**
(21) Anmeldenummer: 04797799.6
(22) Anmeldetag: 11.11.2004
(51) Int. Cl.: A47J 31/46, A47J 31/58, A47J 31/057

(54) **VERFAHREN ZUM BEREITEN VON HEISSGETRÄNKEN UND MASCHINE HIERZU**
METHOD FOR THE PREPARATION OF HOT DRINKS AND MACHINE FOR THE SAME
PROCEDE POUR PREPARER DES BOISSONS CHAUDES ET MACHINE ASSOCIEE

(30) Priorität: 18.11.2003 DE 10353924
(43) Veröffentlichungstag der Anmeldung: 02.08.2006
(73) Patentinhaber: BWT AKTIENGESELLSCHAFT, 5310 Mondsee (AT)
(72) Erfinder: JOHANN, Jürgen, A-5310 Mondsee (AT); SCHROTSHAMER, Christian, A-5310 Mondsee (AT); DRASCHWANDTNER, Karl, A-5310 Mondsee (AT); OBERASCHER, Robert, A-5324 Hintersee (AT); BISSEN, Monique, A-5310 Mondsee (AT)
(74) Vertreter: Pfiz, Thomas
(86) Internationale Anmeldenummer: PCT/EP2004/012758
(87) Internationale Veröffentlichungsnummer: WO 2005/048793

(56) Entgegenhaltungen:
- US-A- 4 548 129

## Beschreibung

Die Erfindung betrifft ein Verfahren zum Bereiten von Heißgetränken, vorzugsweise Kaffee oder Tee, nach dem Oberbegriff des Patentanspruchs 1. Die Erfindung betrifft weiter eine geeignete Vorrichtung bzw. Maschine zur Durchführung des Verfahrens.

Kaffeemaschinen oder generell Maschinen zur Herstellung von Heißwassergetränken neigen auf Grund der hohen Wassertemperatur zur Kalksteinbildung im Wassererwärmer bzw. in der Heizeinheit,und in den nachfolgenden Armaturen (Ventilen) und Rohrleitungen. Zum Schutz der Maschinen wird üblicherweise das Frisch- bzw. Kaltwasser, welches Trinkwasserqualität besitzt, enthärtet oder teilentsalzt. Dabei wird das Wasser vor der Maschine zur Aufbereitung über eine Patrone mit Ionenaustauschermaterial geleitet. Die so genannten Patronenenthärter bzw. -teilentsalzer sollten qualitätsüberwacht und nach Erschöpfung des Ionenaustauschers in regelmäßigen Intervallen ausgetauscht werden.

Als Nachteile dieser Ionenaustauscherpatronen werden angesehen:
- Regelmäßig erforderliche Wartung bzw. Austausch,
- Verkeimungsgefahr,
- Hoher Platzbedarf (Inhalt ca. 10 l),
- Aufwendige Überwachung zum Beispiel über Leitfähigkeit.

Alternativ zur Teilenthärtung ist es bekannt, eine Patrone mit schwach saurem Ionenaustauscher vor der Maschine anzuordnen. In diesem Fall werden die Härtebildner Calcium und Magnesium durch Wasserstoffionen ausgetauscht, welche mit den im Wasser befindlichen Hydrogencarbonationen letztendlich Kohlensäure bilden. Bei dieser Art der Teilentsalzung entsteht ein saures Wasser (pH-Wert <5.5), welches zur Korrosion in der Maschine führen kann.

Bei beiden Verfahren, Teilenthärtung und Teilentsalzung, sollte zur Herstellung von Kaffee das Wasser nur bis zu einer Resthärte von ca. 6 °d enthärtet werden. Somit bleibt eine Kalkabscheidekapazität des Wassers bestehen, welche eine Verkalkung der Maschine nicht ausschließt.

Anstelle von Ionenaustauschem werden auch Inhibitoren, wie zum Beispiel Ortho- oder Polyphosphate zur Inhibierung der Calciumcarbonatkristalle eingesetzt. Die Verhinderung der Kalksteinbildung wird hiermit jedoch nur teilweise erreicht, da bei Temperaturen über ca. 70 °C die Inhibierung auf Phosphatbasis nicht ausreicht. Zudem wird durch Zugabe von Inhibitoren die Wasserqualität verschlechtert, was normalerweise nicht erwünscht ist.

Aus der US-A-4 548 129 ist ein Verfahren der eingangs angegebenen Art bei einer Kaffeemaschine bekannt. Dort wird vorgeschlagen, eine geringe Menge des Kaffeeextrakts von einem Filterbehälter über Verbindungsleitungen in das Frischwasser zurückzuleiten. Diese besitzen eine Öffnung im Bereich des Kaffeefilters, wodurch allerdings die Rückführmenge je nach Filterbefüllung und -durchlässigkeit schwankt. Zudem müssen die Verbindungsleitungen nach jedem Filterwechsel erneut in fluidische Verbindung gebracht werden.

Ausgehend hiervon liegt der Erfindung die Aufgabe zugrunde, ein Verfahren und eine Vorrichtung der eingangs angegebenen Art dahingehend zu verbessern, dass die im Stand der Technik aufgetretenen Nachteile vermieden werden und Kalkablagerungen mit geringem Aufwand und hygienisch unbedenklich verhindert werden.

Zur Lösung dieser Aufgabe wird die im Patentanspruch 1 bzw. 9 angegebene Merkmalskombination vorgeschlagen. Vorteilhafte Ausgestaltungen und Weiterbildungen der Erfindung ergeben sich aus den abhängigen Ansprüchen.

Dementsprechend wird verfahrensmäßig vorgeschlagen, dass die Teilmenge mittels einer Dosiereinrichtung in das Frischwasser eindosiert wird. Überraschenderweise wurde gefunden, dass durch die Teilrückführung von Heißgetränk und insbesondere von Kaffee in das Zulaufwasser die Inhibierung der Kalksteinbildung bestens gelingt. In Versuchen zeigte sich, dass selbst bei Temperaturen von über 90 °C die Stabilisierung mit Kaffee-Extrakt vermutlich aufgrund der darin enthaltenen Kaffeesäure eine gänzliche Verhinderung der Steinbildung bewirkt. Eine ähnliche, wenngleich graduell geringere Wirkung konnte auch bei Rückführung von Tee vermutlich durch die enthaltene Gerbsäure erreicht werden. Bei den Versuchen wurde von dem erzeugten Kaffee bzw. Tee nur eine sehr geringe Menge rückdosiert. Durch diese Maßnahme gelingt es ohne Zugabe von wasserhygienisch bedenklichen Fremdstoffen bzw. ohne eine Voraufbereitung des Wassers mittels lonenaustauscherpatronen, Kalkablagerungen in der Maschine zu unterdrücken. Grundsätzlich ist es auch möglich, dass aus einer ggf. auch erkalteten vorgefertigten Extraktion aus Tee- oder Kaffeepulver ein Inhibitor zur Verminderung bzw. Verhinderung der Kalksteinbildung gewonnen werden kann.

Vorteilhafterweise wird die Teilmenge an einer Mischstelle in eine Frischwasserzuleitung oder in einen Vorratsbehälter der Heizeinheit eingespeist.

Für eine optimale Kalkinhibierung ist es vorteilhaft, wenn die Teilmenge als Rückführstrom in Abhängigkeit von der Zulaufmenge des Frischwassers und gegebenenfalls der Wasserhärte eindosiert wird. Dies lässt sich vorteilhafterweise dadurch erreichen, dass die Teilmenge mittels einer Dosierpumpe in das Frischwasser eindosiert wird.

Eine weitere vorteilhafte Ausführung sieht vor, dass der Verkalkungsinhibitor bzw. Getränkeextrakt über einen Speicherbehälter in das Frischwasser zurückgeführt wird. Dieser sollte zur Verhinderung einer Verkeimung auf eine Temperatur über 60 °C geheizt werden.

Für eine wirksame Dosierung ist es ausreichend, wenn die Konzentration der Teilmenge auf 0,05 bis 2 ml pro Liter Frischwasser eingestellt wird.

Ein vorteilhafter Einsatz bei Kaffeeautomaten sieht vor, dass Kaffee als Heißgetränk chargenweise vorzugsweise in Tassenportionen hergestellt wird.

In vorrichtungsmäßiger Hinsicht ist zur Lösung der vorstehend angegebenen Aufgabe eine Rückführeinrichtung vorgesehen, welche eine saugseitig mit der Brüheinheit verbundene Dosierpumpe aufweist.

In vorteilhafter Ausgestaltung weist die Rückführeinrichtung eine an einer Abzweigstelle von der Brüheinheit abzweigende und an einer Mischstelle in eine Frischwasserzuleitung oder einen Vorratsbehälter der Heizeinheit mündende Rückführleitung auf.

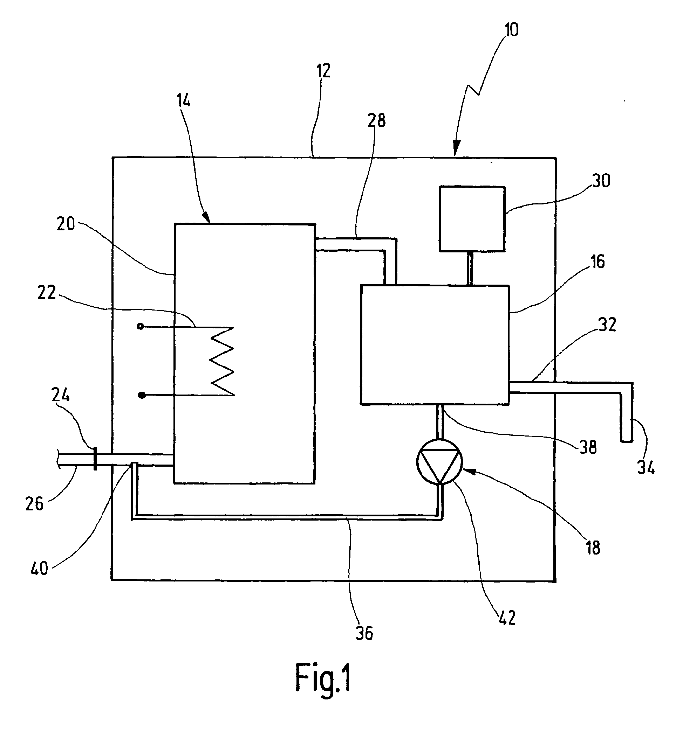

Im Folgenden wird die Erfindung anhand eines in der Zeichnung dargestellten Ausführungsbeispiels näher erläutert. Die einzige Figur zeigt eine Kaffeemaschine mit einer Rückführeinrichtung für Kaffeeextrakt in das Frischwasser in einem Blockschaltbild.

Die in der Zeichnung schematisch dargestellte Kaffeemaschine 10 umfasst eine in einem Gehäuse 12 angeordnete Heizeinheit 14 und eine nachgeordnete Brüheinheit 16 sowie eine Rückführeinrichtung 18 zur Rückführung einer Teilmenge des Kaffee-Extrakts in das zugeleitete Frischwasser.

Die Heizeinheit 14 weist ein Heizbehältnis 20 mit einem darin befindlichen elektrischen Heizelement 22 auf. Der Heizbehältnis 20 ist über eine mittels Absperrventil 24 absperrbare Zuleitung 26 mit Kalt- bzw. Frischwasser vorzugsweise im Durchlauf beaufschlagbar. Denkbar ist es aber auch, dass das Heizbehältnis als Vorratsbehälter zur Aufnahme einer größeren Wassermenge ausgebildet ist. Ausgangsseitig steht das Heizbehältnis 20 über eine Heißwasserleitung 28 mit der Brüheinheit 16 in Verbindung. Der Brüheinheit 16 ist ein Portionierer 30 für Kaffeemehl zugeordnet. Die Brüheinheit 16 mündet über eine Ausgabeleitung 32 in einen gehäuseexternen Auslaufstutzen 34 zur direkten Tassenbefüllung.

Die Rückführeinrichtung 18 weist eine Rückführleitung 36 auf, welche an einer Abzweigstelle 38 von der Brüheinheit 16 abzweigt und an einer Mischstelle 40 in die Zuleitung 26 für Frischwasser mündet. Weiterhin umfasst die Rückführeinrichtung 18 eine in der Rückführleitung 36 angeordnete Dosierpumpe 42, die es ermöglicht, eine einstellbare geringe Teilmenge des in der Brüheinheit 16 erzeugten Kaffees in das Frischwasser zurückzuspeisen. Dabei sollte die Konzentration der Teilmenge auf 0,05 bis 2 ml pro Liter zugeleitetem Frischwasser eingestellt werden. Der überwiegende Teil des ablaufenden Kaffee-Extraktstroms kann somit wie üblich über den Ausgabestutzen 34 abgezapft werden.

Die gesamte Ablaufsteuerung der Kaffeemaschine erfolgt automatisch über eine in dem Gehäuse 12 angeordnete, nicht gezeigte Steuereinrichtung. Das zugeleitete Frischwasser wird mittels des Heizelements 22 vorzugsweise im Durchlauf erhitzt und als Heißwasser bzw. Dampf in der Brüheinheit 16 mit dem Kaffeemehl aufgebrüht, wobei der Kaffeeextrakt über ein nicht gezeigtes Filterelement abgeleitet wird. Durch die Rückdosierung von Kaffee in das Frischwasser wird eine Inhibierung der Kalksteinbildung in der Heizeinheit 14 erreicht, ohne dass gesundheitlich bedenkliche Fremdstoffe in das Wasser zugegeben werden müssten.

Zusammenfassend ist folgendes festzuhalten: Die Erfindung betrifft ein Verfahren und eine Vorrichtung zum Bereiten von Heißgetränken, vorzugsweise Kaffee oder Tee, wobei Frischwasser in einer Heizeinheit 14 aufgeheizt wird und in einer nachgeordneten Brüheinheit 16 das Brühgut mit dem erzeugten Heißwasser oder Dampf zur Bildung des Heißgetränks beaufschlagt wird.

Um eine Verkalkung der Heizeinheit 14 wirkungsvoll zu verhindern, wird vorgeschlagen, dass von dem erzeugten Heißgetränk eine Teilmenge abgezweigt und in das Frischwasser zurückgeführt wird

## Patentansprüche

1. Verfahren zum Bereiten von Heißgetränken, vorzugsweise Kaffee oder Tee, bei welchem Frischwasser in einer Heizeinheit (14) aufgeheizt wird und in einer nachgeordneten Brüheinheit (16) das Brühgut mit dem erzeugten Heißwasser oder Dampf zur Bildung des Heißgetränks beaufschlagt wird, wobei von dem erzeugten Heißgetränk oder einem vorgefertigten Getränkeextrakt eine Teilmenge abgezweigt und als Verkalkungsinhibitor in das Frischwasser zurückgeführt wird, **dadurch gekennzeichnet, dass** die Teilmenge mittels einer Dosiereinrichtung (18) in das Frischwasser eindosiert wird.

2. Verfahren nach Anspruch 1, **dadurch gekennzeichnet, dass** die Teilmenge an einer Mischstelle (40) in eine Frischwasserzuleitung (26) oder in einen Vorratsbehälter (20) der Heizeinheit (14) eingespeist wird.

3. Verfahren nach Anspruch 1 oder 2, **dadurch gekennzeichnet, dass** die Teilmenge als Rückführstrom in Abhängigkeit von der Zulaufmenge des Frischwassers eindosiert wird.

4. Verfahren nach einem der Ansprüche 1 bis 3, **dadurch gekennzeichnet, dass** der Verkalkungsinhibitor über einen Speicherbehälter in das Frischwasser zurückgeführt wird.

5. Verfahren nach Anspruch 4, **dadurch gekennzeichnet, dass** der Speicherbehälter auf eine Temperatur über 60 °C geheizt wird.

6. Verfahren nach einem der Ansprüche 1 bis 5, **dadurch gekennzeichnet, dass** die Teilmenge mittels einer Dosierpumpe (42) in das Frischwasser eindosiert wird.

7. Verfahren nach einem der Ansprüche 1 bis 6, **dadurch gekennzeichnet, dass** die Konzentration der Teilmenge auf 0,05 bis 2 ml pro Liter Frischwasser eingestellt wird.

8. Verfahren nach einem der Ansprüche 1 bis 7, **dadurch gekennzeichnet, dass** Kaffee als Heißgetränk chargenweise vorzugsweise in Tassenportionen hergestellt wird.

9. Maschine zum Bereiten von Heißgetränken, vorzugsweise Kaffee oder Tee, mit einer mit Frischwasser beaufschlagbaren Heizeinheit (14) zur Erzeugung von Heißwasser oder Dampf, einer nachgeordneten Brüheinheit (16) zum Aufbrühen von Brühgut mit dem erzeugten Heißwasser oder Dampf unter Bildung des Heißgetränks und einer Einrichtung (18) zur Rückführung einer Teilmenge des Heißgetränks als Verkalkungsinhibitor in das Frischwasser, **dadurch gekennzeichnet, dass** die Rückführeinrichtung (18) eine saugseitig mit der Brüheinheit (16) verbundene Dosierpumpe (42) aufweist.

10. Maschine nach Anspruch 9, **dadurch gekennzeichnet, dass** die Rückführeinrichtung (18) eine an einer Abzweigstelle (38) von der Brüheinheit (16) abzweigende und an einer Mischstelle (40) in eine Frischwasserzuleitung, (26) oder einen Vorratsbehälter (20) der Heizeinheit (14) mündende Rückführleitung (36) aufweist.

## Claims

1. Method of preparing hot drinks, preferably coffee or tea, whereby fresh water is heated up in a heating unit (14) and the hot water or steam produced is added in a downstream brewing unit (16) to the brewing material to produce the hot drink, wherein a portion of the produced hot drink or of a prefabricated drink extract is branched off and fed back as a lime scale inhibitor into the fresh water, **characterized in that** the portion is added to the fresh water in a metered manner by means of a metering device (18).

2. Method according to claim 1, **characterized in that** the portion is fed at a mixing point (40) into a fresh water supply line (26) or into a reservoir (20) of the heating unit (14).

3. Method according to claim 1 or 2, **characterized in that** the portion is fed as a return flow in a metered manner in dependence upon the admission quantity of fresh water.

4. Method according to one of claims 1 to 3, **characterized in that** the lime scale inhibitor is fed back via a storage tank into the fresh water.

5. Method according to claim 4, **characterized in that** the storage tank is heated to a temperature above 60°C.

6. Method according to one of claims 1 to 5, **characterized in that** the portion is fed into the fresh water in a metered manner by means of a metering pump (42).

7. Method according to one of claims 1 to 6, **characterized in that** the concentration of the portion is set to 0.05 to 2 ml per litre of fresh water.

8. Method according to one of claims 1 to 7, **characterized in that** coffee as a hot drink is produced in batches, preferably in cup-size portions.

9. Machine for preparing hot drinks, preferably coffee or tea, comprising a heating unit (14), into which fresh water may be admitted for producing hot water or steam, a downstream brewing unit (16) for brewing a brewing material with the produced hot water or steam to make the hot drink, and a device (18) for recirculating a portion of the hot drink as a lime scale inhibitor into the fresh water, **characterized in that** the recirculating device (18) comprises a metering pump (42) that is connected at the suction side to the brewing unit (16).

10. Machine according to claim 9, **characterized in that** the recirculating device (18) comprises a return line (36), which at a branch-off point (38) branches off from the brewing unit (16) and at a mixing point (40) opens out into a fresh water supply line (26) or a reservoir (20) of the heating unit (14).

## Revendications

1. Procédé pour préparer des boissons chaudes, de préférence du café ou du thé, selon lequel de l'eau fraîche est chauffée dans une unité de chauffage (14) et, dans une unité d'infusion (16) montée en aval, le produit à infuser est sollicité par l'eau chaude ou la vapeur produite afin de former la boisson chaude, sachant qu'une quantité partielle est dérivée de la boisson chaude produite ou d'un extrait de boisson préfabriqué, et recyclée dans l'eau fraîche comme moyen pour empêcher l'entartrage, **caractérisé en ce que** la quantité partielle est dosée par addition dans l'eau fraîche au moyen d'un équipement de dosage (18).

2. Procédé selon la revendication 1, **caractérisé en ce que** la quantité partielle est alimentée en un point de mélangeage (40) dans une conduite (26) d'alimentation en eau fraîche ou dans un réservoir (20) de l'unité de chauffage (14).

3. Procédé selon la revendication 1 ou 2, **caractérisé en ce que** la quantité partielle est dosée par addition en tant que flux de recyclage en fonction de la quantité alimentée d'eau fraîche.

4. Procédé selon l'une des revendications 1 à 3, **caractérisé en ce que** le moyen pour empêcher l'entartrage est recyclé dans l'eau fraîche par l'intermédiaire d'un récipient de stockage.

5. Procédé selon la revendication 4, **caractérisé en ce que** le récipient de stockage est chauffé à une température supérieure à 60 °C.

6. Procédé selon l'une des revendications 1 à 5, **caractérisé en ce que** la quantité partielle est dosée par addition dans l'eau fraîche au moyen d'une pompe de dosage (42).

7. Procédé selon l'une des revendications 1 à 6, **caractérisé en ce que** la concentration de la quantité partielle est réglée à 0,05 à 2 ml par litre d'eau fraîche.

8. Procédé selon l'une des revendications 1 à 7, **caractérisé en ce qu'**on prépare comme boisson chaude du café par charges, de préférence par portions équivalentes à une tasse.

9. Machine pour préparer des boissons chaudes, de préférence du café ou du thé, avec une unité de chauffage (14) pouvant être alimentée en eau fraîche pour produire de l'eau chaude ou de la vapeur, avec une unité d'infusion (16) montée en aval pour infuser le produit à infuser avec l'eau chaude ou la vapeur produite afin de former la boisson chaude, et avec un équipement (18) pour recycler une quantité partielle de la boisson chaude dans l'eau fraîche comme moyen pour empêcher l'entartrage, **caractérisé en ce que** l'équipement de recyclage (18) présente une pompe de dosage (42) reliée du côté d'aspiration à l'unité d'infusion (16).

10. Machine selon la revendication 9, **caractérisée en ce que** l'équipement de recyclage (18) présente une conduite de recyclage (36) partant en dérivation de l'unité d'infusion (16) en un point de dérivation (38) et débouchant en un point de mélangeage (40) dans une conduite (26) d'alimentation en eau fraîche ou dans un réservoir (20) de l'unité de chauffage (14).
